# EUROPEAN PATENT APPLICATION

(11) **EP 1 132 437 A2**
(43) Date of publication of application: **12.09.2001**
(21) Application number: 01302082.1
(22) Date of filing: 07.03.2001
(51) Int. Cl.: C09D 5/14

(54) **Antimicrobial coatings for architectural hardware articles**

(30) Priority: 07.03.2000 US 520647
(71) Applicant: Schlage Lock Company, Colorado Springs, CO 80920 (US)
(72) Inventor: Allen, Cliff W., Colorado Springs, CO 80919 (US); Bowerbank, Renate A., Colorado Springs, CO 80919 (US); Furlong, Jonathan W., Colorado Springs, CO 80922 (US); Ott, Willard B III, Colorado Springs, CO 80919 (US); Reed, Nancy, Palmer Lake, CO 80133 (US)
(74) Representative: Feakins, Graham Allan

(57) **Abstract**

Protective non-metallic coverings are typically used over architectural hardware articles. The coverings can include polymer clear coat, or moulded polymers to give shape and feel to the article. An antimicrobial agent is added to the protective non-metallic coverings. These coverings can maintain an antimicrobial action for a significantly long time to do the following: protect the polymers from degradation, due to mould, fungus and mildew. The antimicrobial agents can also inhibit growth of germ causing bacteria and reduce objectionable odours caused by bacterial growth.

## Description

This invention relates generally to coatings for architectural hardware articles and more particularly to antimicrobial coatings for architectural hardware articles.

Current architectural hardware articles, such as door knobs, levers, handles, exit device push pads and push bars, railings, balustrades, biometric geometry readers, etc., are typically manufactured with an anticorrosion coating over a base core. For certain articles, an injection mouldable resin is moulded over a base core. In other articles, the base core is eliminated and the entire architectural hardware article is mouldable resin. When these architectural hardware articles are used, whether by a consumer in their own home or by the public in a public facility, germs and other infectious agents can be deposited by a first person on the handle, push pad, etc., which can then be transferred to the hands of the next person and possibly transmit the germs or other infectious agents to the next person.

According to one aspect of the present invention, there is provided a coating for an architectural hardware article comprising a polymeric base coating material, characterised in that the polymeric base coating material contains one or more organic or inorganic antimicrobial agents.

According to a second aspect of the present invention, there is provided a coated architectural hardware article comprising a base metal core and an anticorrosion protective coating, characterised in that the anticorrosion protective coating contains an antimicrobial agent.

According to a third aspect of the present invention, there is provided a coated architectural hardware article comprising a base metal core and a nylon resin moulded about the base metal core; characterised in that the resin contains 2,4,4-trichloro-2-hydroxydiphenyl ether antimicrobial agent.

For a better understanding of the invention, reference will now be made, by way of example, to the accompanying description.

The present invention relates to an antimicrobial agent in non-metallic polymeric coverings or coatings over a base core for architectural hardware products or articles. Typically the base core is a metal core. However, some architectural hardware products are formed from a mouldable resin, such as nylon, without the use of a metal core. For products where the product appearance comes from a base material such as brass, chrome, brass-like coatings, chrome-like coatings, etc., a protective clear coating is used to protect the underlying material. In other products, a mouldable resin with a colouring agent is moulded over the base material to provide the aesthetic appearance. In each case, an antimicrobial agent is added to the top coating, whether it is a protective coating over a base core, an over-moulded resin on a base core or a moulded resin without a base core.

One embodiment uses an antimicrobial agent in a polymeric clear coat layer covering the main metallic body of the architectural hardware article. The polymeric clear coat protects the metal body from corrosion, rust, oxidation, discolouration, staining, etc. One or more inorganic or organic antimicrobial agents are added to the polymeric clear coat. One example of an acceptable clear coat is acrylic clear coat 1F 7066 from H. B. Fuller.

A second embodiment uses an antimicrobial agent mixed throughout a mouldable resin, such as nylon, which is usually overmoulded over a base core, typically formed of a carbon steel. Alternatively, this polymeric resin can be bonded to the base core. In an alternate embodiment, the architectural hardware article is entirely formed of the mouldable resin without an underlying base core. Other resins which can be used include polypropylene, polyethylene, polyvinyl chloride, styrene, polyurethane, thermoplastic polyesters, thermoplastic elastomers, polycarbonates and engineering plastics.

For this second embodiment, a plain feedstock, such as nylon, is mixed with a colour concentrate and an antimicrobial agent. The feedstock, colour concentrate and antimicrobial agent blended mixture is dried at 80 degrees Celsius for 3 to 4 hours to reduce the moisture content to below 0.1%. If a base core is being used, the base core is inserted into a mould. The blended mixture is melted and injected into the mould with a pressure of approximately 200 bars. The part is held for a predetermined time which is determined by the amount of nylon, the size of the part and required surface finish, all of which are known by one skilled in the art of polymeric resin moulding. Typically nylon thicknesses range from 1mm. for nylon overmoulds to 41mm. for solid nylon articles. This process can be used for many types of architectural hardware articles, such as sanitary products, products for the handicapped, handrails, balustrades, pulls, handles, levers, etc. One key factor of this second embodiment is that the antimicrobial agent is mixed throughout the relatively thick nylon (1mm. to 41mm.) which makes the antimicrobial effect of the antimicrobial agent less susceptible to diminution through scratching, wear or abrasion.

In addition, a second polymeric resin can be moulded or bonded over the first resin. In this instance, the antimicrobial agent would be included in the second or top layer. In this instance, the first polymer usually provides the general shape, design or some other attribute such as strength to the article. The second polymer then provides a second attribute to the article, i.e., a "soft" touch, a different colour or special texture to the article. When two resin layers are used, a base core may or may not be needed.

For either embodiment, organic or inorganic antimicrobial agents can be used. When used in a clear coat, acceptable antimicrobial agent concentrations are 0.1 to 10 w%. Where clarity of the clear coat is particularly critical, concentrations of 0.25 to 1 w% are preferred. When used in a mouldable polymeric resin, acceptable antimicrobial agent concentrations are 0.5 to 10 w% with a preferred range of 1 to 3 w%.

Examples of acceptable inorganic antimicrobial agents include silver supporting TiO₂ or ZnO where the TiO2 or the ZnO core molecules are coated with metallic silver. Two acceptable products are Microfree® Z 200 by Dupont where a ZnO core is coated with metallic silver and Microfree® T 558, also by Dupont, where a TiO₂ core is coated with a mixture of silver, copper oxide and zinc silicate. For both Microfree® products, the silver has an antimicrobial effect and the copper oxide and zinc silicate have an antifungal effect. Other acceptable antimicrobial agents are inorganic compounds containing silver, copper, platinum, palladium, tin, bismuth, iridium, antimony, gold or zinc.

Examples of acceptable organic antimicrobial agents include Microban® by Microban Products Company, Huntersville, North Carolina, U.S., 2,4,4-trichloro-2-hydroxydiphenyl ether, commercially available as "Triclosan" or "Irgasan DP 300" from Ciba-Geigy Corporation and 3,4,4"-trichlorocarbanilide, N-(4-Chlorophenyl-N-3, 4-dichlorophenyl) Urea, commercially available from Nipa Hardwicke Incorporated as "Triclocarban" or "Nipaguard TCC".

## Claims

1. A coating for an architectural hardware article comprising a polymeric base coating material, **characterised in that** the polymeric base coating material contains one or more organic or inorganic antimicrobial agents.

2. A coated architectural hardware article comprising a base metal core and an anticorrosion protective coating, **characterised in that** the anticorrosion protective coating contains an antimicrobial agent.

3. A coating according to claim 1 or article according to claim 2, wherein the base coating material is a clear material.

4. A coating according to claim 1 or 3 or article according to claim 2 or 3, wherein the base coating material is an injection mouldable resin.

5. A coating or article according to claim 4, wherein the resin is nylon.

6. A coating or article according to claim 5, further comprising a colouring agent.

7. A coated architectural hardware article according to any one of claims 2 to 7, further comprising an additional polymeric coating.

8. An article according to claim 11, wherein the additional polymeric coating is on top of the anticorrosion protective coating.

9. A coating according to any one of claims 1 to 6 or an article according to any one of claims 2 to 8, wherein the antimicrobial agent includes one or more silver-supporting inorganic compounds.

10. A coating or article according to claim 9, wherein the antimicrobial agent includes one or more inorganics selected from the group consisting of TiO₂ and ZnO.

11. A coating according to any one of claims 1 to 6 or an article according to any one of claims 2 to 8, wherein the antimicrobial agent is an inorganic compound including or more of Ag, Pd, Pt, Sn, Sb, Bi, Id, Au, Zn or Cu.

12. A coating according to any one of claims 1 to 6 or an article according to any one of claims 2 to 8, wherein the antimicrobial agent is 3,4,4"-trichlorocarbanilide, N- (4-Chlorophenyl-N-3,4-dichlorophenyl) Urea.

13. A coating according to any one of claims 1 to 6 or an article according to any one of claims 2 to 8, wherein the antimicrobial agent is 2,4,4-trichloro-2-hydroxydiphenyl ether.

14. A coating according to any one of claims 1 to 6 or an article according to any one of claims 2 to 8, wherein the antimicrobial agent has a concentration of at least 0.1 w%.

15. A coating according to any one of claims 1 to 6 or an article according to any one of claims 2 to 8, wherein the antimicrobial agent has a concentration of 0.1 w% to 10 w%.

16. A coating according to any one of claims 1 to 6 or an article according to any one of claims 2 to 8, wherein the antimicrobial agent has a concentration of 1 w% to 3 w%.

17. A coating according to any one of claims 1 to 6 or an article according to any one of claims 2 to 8, wherein the antimicrobial agent has a concentration of 0.25 w% to 1 w%.

18. An architectural hardware article comprising a nylon core and one or more organic or inorganic antimicrobial agents mixed throughout the nylon core.

19. An article according to claim 18, wherein the nylon core further includes a colouring agent.

20. An article according to claim 18 or 19, wherein the antimicrobial agent is an inorganic compound including or more of Ag, Pd, Pt, Sn, Sb, Bi, Id, Au, Zn or Cu.

21. An article according to claim 18 or 19, wherein the antimicrobial agent is 2,4,4-trichloro-2-hydroxydiphenyl ether.

22. An article according to claim 18 or 19, wherein the antimicrobial agent is 3,4,4"-trichlorocarbanilide, N-(4-Chlorophenyl-N-3, 4-dichlorophenyl) Urea.

23. An article according to claim 18 or 19, wherein the antimicrobial agent has a concentration of 1 w% to 3 w%.

24. A coated architectural hardware article comprising a base metal core and a nylon resin moulded about the base metal core; **characterised in that** the resin contains 2,4,4-trichloro-2-hydroxydiphenyl ether antimicrobial agent.

25. An article according to claim 24, wherein the antimicrobial agent has a concentration of at least 0.5 w%.

26. An article according to claim 25, wherein the antimicrobial agent has a concentration of 1 w% to 3 w%.
